# EUROPEAN PATENT SPECIFICATION

(11) **EP 2 484 649 B1**
(45) Date of publication and mention of the grant of the patent: **18.12.2013**
(21) Application number: 10820559.2
(22) Date of filing: 29.09.2010
(51) Int. Cl.: C03C 27/12, C08K 3/20, C08K 5/3412, C08L 101/00, B32B 17/10

(54) **INTERMEDIATE FILM FOR LAMINATED GLASS, AND LAMINATED GLASS**
ZWISCHENFOLIE FÜR VERBUNDGLAS UND VERBUNDGLAS
FILM INTERMÉDIAIRE POUR VERRE FEUILLETÉ, ET VERRE FEUILLETÉ

(30) Priority: 29.09.2009 JP 2009225599
(43) Date of publication of application: 08.08.2012
(73) Proprietor: Sekisui Chemical Co., Ltd., Osaka 530-8565 (JP)
(72) Inventor: FUKATANI, Juichi, Kouka-shi Shiga 528-8585 (JP); KITANO, Hirofumi, Kouka-shi Shiga 528-8585 (JP); II, Daizou, Mishima-gun Osaka 618-0021 (JP); OKABAYASHI, Takazumi, Mishima-gun Osaka 618-0021 (JP); TSUNODA, Ryuta, Kouka-shi Shiga 528-8585 (JP)
(74) Representative: ter Meer, Nicolaus
(86) International application number: PCT/JP2010/066916
(87) International publication number: WO 2011/040444

(56) References cited:
- EP-A1- 1 419 999
- EP-A1- 2 471 761
- EP-A1- 2 471 762
- WO-A1-03/018502
- JP-A- 5 084 738
- JP-A- 2007 045 636
- JP-A- 2008 024 538

## Description

### TECHNICAL FIELD

The present invention relates to an interlayer film for laminated glass used for automobiles, buildings, and the like. More specifically, the present invention relates to an interlayer film for laminated glass which can provide an obtainable laminated glass with enhanced heat insulation property, and also relates to a laminated glass produced using the interlayer film for laminated glass.

### BACKGROUND ART

A laminated glass is a safety glass because few glass fragments are scattered even if it is broken by impact from the outside. Therefore, the laminated glass has been used widely for automobiles, railway cars, aircrafts, vessels, buildings, and the like. The laminated glass has an interlayer film for laminated glass interposed between a pair of glass sheets. Such a laminated glass to be used for opening portions of automobiles and buildings is required to have excellent heat insulation property.

The energy amount of infrared rays having a wavelength of 780 nm or more, which is longer than the wavelength of visible light, is smaller than that of UV rays. However, infrared rays have a large thermal effect and are released as heat once absorbed in a substance. Therefore, infrared rays are commonly referred to as heat rays. In order to enhance the heat insulation property of a laminated glass, it is necessary to sufficiently insulate infrared rays.

In recent years, with an aim of effectively insulating the infrared rays (heat rays), an interlayer film for laminated glass contains tin-doped indium oxide particles (ITO particles) or antimony-doped tin oxide particles (ATO particles).

As one example of an interlayer film for laminated glass which does not contain the heat insulating particles, Patent Document 1 discloses an interlayer film for laminated glass comprising 96.5 to 99.6 wt% of a synthetic resin, 0.2 to 3.0 wt% of a UV absorber, and 0.02 to 0.5 wt% of a yellow dye. Patent Document 1 discloses that a laminated glass including such an interlayer film for laminated glass repels bugs.

Patent Document 1: JP 2000-300149 A

### SUMMARY OF THE INVENTION

### PROBLEMS TO BE SOLVED BY THE INVENTION

Recently, further enhancement of the heat insulation property of a conventional interlayer film containing ITO particles or ATO particles has been demanded. However, the ITO particles and the ATO particles do not absorb near infrared rays sufficiently. Accordingly, it may be difficult to significantly enhance the heat insulation property of the laminated glass by simple addition of ITO particles or ATO particles to the interlayer film.

For example, California Air Resources Board (CARB) in the United States has suggested reduction of carbon dioxide discharged from automobiles in order to reduce greenhouse gases. To achieve the reduction of carbon dioxide discharged from automobiles, the CARB has considered controlling heat energy entering automobiles through the laminated glass to reduce fuels consumed for running air conditioners, which may contribute to improvement of fuel efficiency. Specifically, the CARB has planned to enforce Cool Cars Standards.

The planned requirements of the Cool Cars Standards was specifically not higher than 50% of Total Solar Transmittance (Tts) of laminated glass used for automobiles in 2012 and not higher than 40% of the Tts of the laminated glass in 2016. Here, the Tts is an index of heat insulating performance.

Glass on which a thin metallic film is deposited or heat ray-reflecting laminated glass produced using heat reflecting PET, which is of a so-called heat reflecting type, reflects not only infrared rays but also communication waves having communication wavelengths. In the case of using heat reflecting laminated glass for wind shields, the glass needs to have its heat ray-reflecting part hollowed out so as to correspond to various censors. As a result, the entire surface of the wind shields produced using heat ray-reflecting laminated glass having the Tts of 50% has the Tts of about 53% on average. Accordingly, the Tts up to 53% was planned to be allowed with regard to a laminated glass of the type which transmits communication waves and absorbs infrared rays.

At the time point of September in 2010, enforcement of the Cool Cars Standards is avoided. However, the trend still demands a laminated glass having low Tts.

In addition, the laminated glass is required to have not only excellent heat insulation property but also excellent visible transmittance. For example, the visible transmittance is preferably not lower than 70%. Namely, the requirement is enhancement of heat insulation property while maintaining the high visible transmittance.

In the case of using a conventional interlayer film for laminated glass containing heat insulating particles, it is very difficult to obtain a laminated glass satisfying both the Tts of not higher than 53% and the visible transmittance of not lower than 70%. Even in the case of using an interlayer film for laminated glass disclosed in Patent Document 1, it is very difficult to obtain a laminated glass satisfying both the Tts of not higher than 53% and the visible transmittance of not lower than 70%.

The present invention is aimed to provide an interlayer film for laminated glass which can provide an obtainable laminated glass with low Tts and high visible transmittance, and a laminated glass produced using the interlayer film for laminated glass.

### MEANS FOR SOLVING THE PROBLEMS

According to a broad aspect of the present invention, the present invention provides an interlayer film for laminated glass comprising: a thermoplastic resin; a plasticizer; heat insulating particles; at least one compound selected from the group consisting of a phthalocyanine compound, a naphtalocyanine compound, and an anthracyanine compound; and a yellow dye, wherein the amount of the heat insulating particles is 0.01 to 2 parts by weight and the total amount of the compound and the yellow dye is not more than 0.25 parts by weight, relative to each 100 parts by weight of the thermoplastic resin. In the interlayer film for laminated glass, the heat insulating particles are preferably metal oxide particles.

According to a specific aspect of the interlayer film for laminated glass of the present invention, the amount of the compound is 0.001 to 0.04 parts by weight relative to each 100 parts by weight of the thermoplastic resin.

According to another specific aspect of the interlayer film for laminated glass of the present invention, the amount of the yellow dye is 0.005 to 0.24 parts by weight relative to each 100 parts by weight of the thermoplastic resin.

According to another broad aspect of the present invention, the present invention provides an interlayer film for laminated glass comprising: a thermoplastic resin; a plasticizer; heat insulating particles; at least one compound selected from the group consisting of a phthalocyanine compound, a naphtalocyanine compound, and an anthracyanine compound; and a yellow dye, wherein the proportion of the heat insulating particles is 0.05 to 12 g/m² and the total proportion of the compound and the yellow dye is not more than 1.5 g/m². In the interlayer film for laminated glass, the heat insulating particles are preferably metal oxide particles.

According to another specific aspect of the interlayer film for laminated glass of the present invention, the proportion of the compound is 0.005 to 0.2 g/m².

According to another specific aspect of the interlayer film for laminated glass of the present invention, the proportion of the yellow dye is 0.025 to 1.45 g/m²

The laminated glass of the present invention comprises: a first and a second laminated glass components; and an interlayer film interposed between the first and the second laminated glass components, wherein the interlayer film includes the interlayer film for laminated glass according to the present invention or is the interlayer film for laminated glass itself.

According to another specific aspect of the present invention, the interlayer film interposed between the first and the second laminated glass components is the interlayer film for laminated glass itself.

### EFFECT OF THE INVENTION

The interlayer film for laminated glass of the present invention comprises a thermoplastic resin; a plasticizer; heat insulating particles; at least one compound selected from the group consisting of a phthalocyanine compound, a naphtalocyanine compound, and an anthracyanine compound; and a yellow dye. The amount and the proportion of the heat insulating particles and the total amount and the total proportion of the compound and the yellow dye, relative to the amount of the thermoplastic resin or in the interlayer film for laminated glass, are within the specific ranges as mentioned above. Accordingly, it is possible to obtain a laminated glass having sufficiently low Tts and sufficiently high visible transmittance.

### BRIEF DESCRIPTION OF THE DRAWING

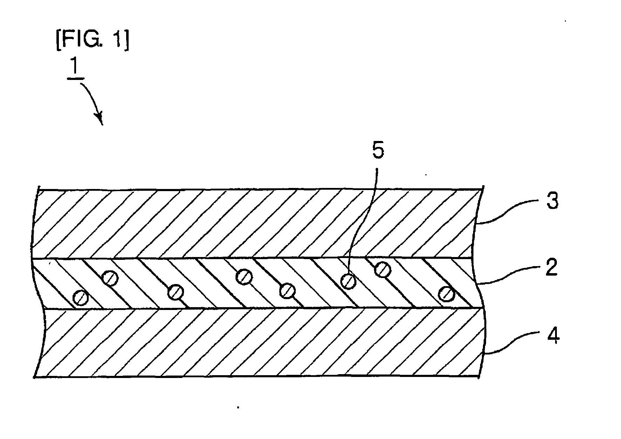

Fig. 1 is a cross-sectional view schematically showing one example of a laminated glass including an interlayer film for laminated glass according to one embodiment of the present invention.

### MODES FOR CARRYING OUT THE INVENTION

The present invention is specifically described below.
The interlayer film for laminated glass of the present invention contains a thermoplastic resin, a plasticizer, heat insulating particles, at least one compound selected from the group consisting of a phthalocyanine compound, a naphtalocyanine compound, and an anthracyanine compound, and a yellow dye. Hereinafter, at least one compound selected from the group consisting of a phthalocyanine compound, a naphtalocyanine compound, and an anthracyanine compound may also be referred to as a compound X.

In the interlayer film for laminated glass of the present invention, the amount of the heat insulating particles is 0. 01 to 2 parts by weight and the total amount of the compound X and the yellow dye is not more than 0.25 parts by weight, relative to each 100 parts by weight of the thermoplastic resin. Or alternatively, the interlayer film for laminated glass of the present invention contains the heat insulating particles in the proportion of 0.05 to 12 g/m² and the compound X and the yellow dye in the total proportion of not more than 1.5 g/m².

The present invention is mainly characterized in that heat insulating particles, the compound X, and the yellow dye are used in combination and that their amounts relative to the amount of the thermoplastic resin or their proportion in the interlayer film for laminated glass satisfies the above relationship. Accordingly, it is possible to obtain a laminated glass having sufficiently low Tts (Total Solar Transmittance) and sufficiently high visible transmittance. Namely, use of the interlayer film for laminated glass of the present invention enhances the heat insulation property and the transparency of the laminated glass.

In addition, use of the interlayer film for laminated glass of the present invention enables, for example, production of a laminated glass satisfying the requirement of Cool Cars Standards which has been planned to be enforced by California Air Resources Board (CARB). Specifically, a laminated glass is allowed to have the Tts of not higher than 53%. Moreover, the laminated glass is allowed to have the visible transmittance of not lower than 70%.

Conventionally, in the case of using an interlayer film for laminated glass containing heat insulating particles such as ITO particles, it is very difficult to obtain a laminated glass satisfying both the Tts of not higher than 53% and the visible transmittance of not lower than 70%. Here, use of the interlayer film for laminated glass of the present invention enables production of a laminated glass satisfying both the Tts of not higher than 53% and the visible transmittance of not lower than 70%.

In the present description, the Tts and the visible transmittance are performances demanded by the Cool Cars Standards. For example, the Tts is measured in accordance with the measuring method defined by the Cool Cars Standards which has been planned to be enforced. The visible transmittance is, for example, measured in accordance with JIS R3211 (1998).

### (Thermoplastic resin)

The thermoplastic resin contained in the interlayer film for laminated glass of the present invention is not particularly limited and a conventionally-known thermoplastic resin may be used. Only one species of the thermoplastic resin may be used, or two or more species of the thermoplastic resins may be used in combination.

Examples of the thermoplastic resin include a polyvinyl acetal resin, an ethylene-vinyl acetate copolymer resin, an ethylene-acrylic copolymer resin, a polyurethane resin, and a polyvinyl alcohol resin. Thermoplastic resins other than these may also be used.

The thermoplastic resin is preferably a polyvinyl acetal resin. Combination use of a polyvinyl acetal resin and a plasticizer further enhances adhesion of an obtainable interlayer film to a laminated glass component.

The polyvinyl acetal resin may be produced, for example, by acetalizing polyvinyl alcohol with an aldehyde. The polyvinyl alcohol may be produced, for example, by saponifying polyvinyl acetate. The saponification degree of the polyvinyl alcohol is commonly 80 to 99.8 mol%.

The lower limit of the polymerization degree of the polyvinyl alcohol is preferably 200, and more preferably 500. The upper limit thereof is preferably 3000, and more preferably 2500. A too-low polymerization degree tends to lower the penetration resistance of the laminated glass. A too-high polymerization degree may cause difficulty in forming an interlayer film for laminated glass.

The aldehyde is not particularly limited, and commonly, a C1 to C10 aldehyde is favorably used. Examples of the C1 to C10 aldehyde include propionaldehyde, n-butyl aldehyde, isobutyl aldehyde, n-valeraldehyde, 2-ethylbutyl aldehyde, n-hexylaldehyde, n-octylaldehyde, n-nonylaldehyde, n-decylaldehyde, formaldehyde, acetaldehyde, and benzaldehyde. Preferable among these are propionaldehyde, n-butyl aldehyde, isobutyl aldehyde, n-hexylaldehyde, and n-valeraldehyde. Further, n-butyl aldehyde, n-hexylaldehyde, and n-valeraldehyde are preferable. Moreover, n-butyl aldehyde is more preferable. Only one species thereof may be used, or two or more species thereof may be used in combination.

The hydroxy group content (the amount of hydroxy group) in the polyvinyl acetal resin is preferably 15 to 40 mol%. The lower limit of the content is more preferably 18 mol% and the upper limit thereof is more preferably 35 mol%. Too-low hydroxy group content may lower the adhesion of the obtainable interlayer film. Too-high hydroxy group content lowers the flexibility of the obtainable interlayer film, deteriorating the handleability of the interlayer film.

The hydroxy group content in the polyvinyl acetal resin is a mole fraction expressed as percent (mol%) obtained by dividing the amount of ethylene groups to which hydroxy groups are bonded by the total amount of ethylene groups in the main chain. It is possible to obtain the amount of ethylene groups to which hydroxy groups are bonded, for example, by measuring the amount of ethylene groups to which hydroxy groups of polyvinyl alcohol as a raw material are bonded in accordance with JIS K6726 "Test Methods for Polyvinyl Alcohol".

The lower limit of the acetylation degree (the amount of acetyl groups) of the polyvinyl acetal resin is preferably 0.1 mol%, more preferably 0.3 mol%, and still more preferably 0.5 mol%. The upper limit thereof is preferably 30 mol%, more preferably 25 mol%, still more preferably 20 mol%, and particularly preferably 10 mol%. Too-low acetylation degree may lower the compatibility between the polyvinyl acetal resin and the plasticizer. Too-high acetylation degree may lower the moisture resistance of the interlayer film.

The acetylation degree is obtained as described below. The amounts of ethylene groups to which acetal groups are bonded and to which ethylene groups are bonded are subtracted from the total amount of ethylene groups in the main chain. The obtained value is divided by the total amount of ethylene groups in the main chain. The obtained mole fraction expressed as percent (mol%) is the acetylation degree. The amount of ethylene groups to which acetal groups are bonded can be measured in accordance with JIS K6728 "Test Methods for Polyvinyl butyral".

The lower limit of the acetalization degree of the polyvinyl acetal resin is preferably 60 mol%, and more preferably 63 mol%. The upper limit thereof is preferably 85 mol%, more preferably 75 mol%, and still more preferably 70 mol%. A too-low acetalization degree may lower the compatibility between the polyvinyl acetal resin and the plasticizer. A too-high acetalization degree may prolong the reaction time needed for producing the polyvinyl acetal resin.

The acetalization degree is a mole fraction expressed as percent (mol%) obtained by dividing the amount of ethylene groups to which acetal groups are bonded by the total amount of ethylene groups in the main chain.

It is possible to obtain the acetalization degree by measuring the the amount of acetyl groups and the amount of vinyl alcohol (the hydroxy group content) in accordance with JIS K6728 "Test Methods for Polyvinyl butyral", calculating the molar fractions based on the measurement results, and subtracting the molar fractions of the amount of acetyl groups and of the amount of vinyl alcohol from 100 mol%.

When a polyvinyl butyral resin is used as the polyvinyl acetal resin, it is possible to obtain the acetalization degree (butiralyzation degree) and the amount of acetyl groups from the measurements in accordance with JIS K6728 "Test Methods for Polyvinyl butyral".

### (Plasticizer)

The plasticizer contained in the interlayer film for laminated glass of the present invention is not particularly limited, and a conventionally-known plasticizer may be used. Only one species of the plasticizer may be used, or two or more species thereof may be used in combination.

Examples of the plasticizer include organic ester plasticizers such as monobasic organic acid esters, polybasic organic acid esters, and phosphate plasticizers such as organic phosphate plasticizers and organic phosphorous plasticizers. Among these, organic ester plasticizers are preferable. The plasticizer is preferably in a liquid form.

The monobasic organic acid esters are not particularly limited, and examples thereof include: glycol esters obtained by reaction between glycol and a monobasic organic acid; and esters of a monobasic organic acid and one of triethylene glycol and tripropylene glycol. Examples of the glycol include triethylene glycol, tetraethylene glycol, and tripropyl glycol. Examples of the monobasic organic acid esters include butyric acid, isobutyric acid, caproic acid, 2-ethylbutyrate, heptylic acid, n-octylic acid, 2-ethylhexilic acid, n-nonylic acid, and decylic acid.

The polybasic organic acid esters are not particularly limited, and may be an ester compound of a polybasic organic acid and a C4 to C8 linear-, or branched alcohol. Examples of the polybasic organic acid include adipic acid, sebacic acid, and azelaic acid.

The organic ester plasticizer is not particularly limited, and examples thereof include triethylene glycol di-2-ethyl butyrate, triethylene glycol di-2-ethyl hexanoate, triethylene glycol dicaprylate, triethylene glycol di-n-octanoate, triethylene glycol di-n-heptanoate, tetraethylene glycol di-n-heptanoate, dibutyl cebacate, dioctyl azelate, dibutyl carbitol adipate, ethylene glycol di-2-ethylbutyrate, 1,3-propylene glycol di-2-ethylbutyrate, 1,4-butylene glycol di-2-ethyl butyrate, diethylene glycol di-2-ethyl hexanoate, dipropyrene glycol di-2-ethylbutyrate, triethylene glycol di-2-ethylpentanoate, tetraethylene glycol di-2-ethylbutyrate, diethylene glycol dicaprylate, dihexyl adipate, dioctyl adipate, hexyl cyclohexyl adipate, a mixture of heptyl adipate and nonyl adipate, diisononyl adipate, diisodecyl adipate, heptylnonyl adipate, dibutyl sebacate, oil-modified alkyd sebacate, and a mixture of phosphate ester and ester adipate. An organic ester plasticizer other than these may also be used. Moreover, an ester adipate other than the above ester adipates may be used.

The organic phosphate plasticizer is not particularly limited, and examples thereof include tributoxyethyl phosphate, isodecylphenyl phosphate, and triisopropyl phosphate.

The plasticizer is preferably at least one species selected from the group consisting of triethyleneglycol di-2-ethylhexanoate (3GO) and triethyleneglycol di-2-ethylbutylate (3GH). Further, triethyleneglycol di-2-ethylhexanoate is more preferable.

The interlayer film for laminated glass of the present invention preferably contains at least one species selected from the group consisting of triethyleneglycol di-2-ethylhexanoate (3GO) and triethyleneglycol di-2-ethylbutylate (3GH) as the plasticizer. More preferably, the interlayer film for laminated glass of the present invention contains triethyleneglycol di-2-ethylhexanoate.

The amount of the plasticizer in the interlayer film for laminated glass of the present invention is not particularly limited. The lower limit of the amount of the plasticizer is preferably 25 parts by weight, more preferably 30 parts by weight, and still more preferably 35 parts by weight, for each 100 parts by weight of the thermoplastic resin. The upper limit thereof is preferably 75 parts by weight, more preferably 60 parts by weight, and still more preferably 50 parts by weight. When the amount of the plasticizer satisfies the above preferable lower limit, the penetration resistance of the obtainable laminated glass is further enhanced. Moreover, when the amount of the plasticizer satisfies the above upper limit, the transparency of the interlayer film is further enhanced.

### (Heat insulating particles)

The interlayer film for laminated glass of the present invention contains the heat insulating particles. The heat insulating particles are preferably formed of metal oxides. Only one species of the heat insulating particles may be used, or two or more species of the heat insulating particles may be used in combination.

The energy amount of infrared rays having a wavelength of 780 nm or longer, which is longer than the wavelength of a visible light, is smaller than that of UV rays. However, infrared rays have a large thermal effect and are released as heat once absorbed in a substance. Therefore, infrared rays are commonly referred to as heat rays. Use of the heat insulating particles efficiently insulates infrared rays (heat rays). The heat insulating particles herein refer to particles which absorb infrared rays.

Specific examples of the heat insulating particles include metal oxide particles such as aluminum-doped tin oxide particles, indium-doped tin oxide particles, antimony-doped tin oxide particles (ATO particles), gallium-doped zinc oxide particles (GZO particles), indium-doped zinc oxide particles (IZO particles), aluminum-doped zinc oxide particles (AZO particles), niobium-doped titanium oxide particles, sodium-doped tungsten oxide particles, cesium-doped tungsten oxide particles, thallium-doped tungsten oxide particles, rubidium-doped tungsten oxide particles, tin-doped indium oxide particles (ITO particles), tin-doped zinc oxide particles, and silicon-doped zinc oxide particles, and lanthanum hexaboride (LaB₆) particles. Heat insulating particles other than these may also be used. Among these, the metal oxide particles are preferable because of its excellent performance of insulating heat rays. Further, more preferable are the ATO particles, the GZO particles, the IZO particles, the ITO particles, and cesium-doped tungsten oxide particles. Moreover, the ITO particles are still more preferable.

The lattice constant of ITO-particle crystals is preferably 10.11 to 10.16 Å as it allows sufficient enhancement of heat-ray insulating property. Commonly, the lattice constant of ITO-particle crystals is 10.11 to 10.16 Å and the lattice constant of ITO-particle crystals used in examples described later is also 10.11 to 10.16 Å.

In terms of further enhancing the transparency and the heat insulation property of the laminated glass, the lower limit of the average particle size of the heat insulating particles is preferably 10 nm, and more preferably 20 nm. The upper limit thereof is preferably 100 nm, more preferably 80 nm, and still more preferably 50 nm. When the average particle size satisfies the preferable lower limit, the heat insulation property is sufficiently enhanced. When the average particle size satisfies the preferable upper limit, the transparency of the obtainable laminated glass is enhanced.

The "average particle size" refers to the volume average particle size. The average particle size can be measured using a particle size distribution measuring device (NIKKISO CO., LTD., "UPA-EX150").

The amount of the heat insulating particles is preferably 0.01 to 2 parts by weight relative to each 100 parts by weight of the thermoplastic resin. The interlayer film for laminated glass of the present invention preferably contains the heat insulating particles in the proportion of 0.05 to 12 g/m². In the present invention, the amount of the heat insulating particles is 0.01 to 2 parts by weight relative to each 100 parts by weight of the thermoplastic resin, or the interlayer film for laminated glass of the present invention preferably contains the heat insulating particles in the proportion of 0.05 to 12 g/m². When either of the amount of the heat insulating particles to each 100 parts by weight of the thermoplastic resin and the proportion of the heat insulating particles in the interlayer film for laminated glass is within the above range, the Tts is sufficiently lowered and the visible transmittance is sufficiently enhanced. For example, the Tts of not higher than 53% and the visible transmittance of not lower than 70% are both achieved. Here, in the present invention, the heat insulating particles may satisfy both the amount of 0.01 to 2 parts by weight relative to each 100 parts by weight of the thermoplastic resin and the proportion of 0.05 to 12 g/m² in the interlayer film for laminated glass. A too-large amount of the heat insulating particles may increase the haze value of the obtainable laminated glass.

The lower limit of the amount of the heat insulating particles is more preferably 0.1 parts by weight, still more preferably 0.14 parts by weight, further preferably 0.5 parts by weight, still further preferably 0.55 parts by weight, and particularly preferably 0.6 parts by weight, relative to each 100 parts by weight of the thermoplastic resin. The upper limit thereof is more preferably 1.5 parts by weight, still more preferably 1.2 parts by weight, further preferably 1 part by weight, still further preferably 0.9 parts by weight, and particularly preferably 0.8 parts by weight. The lower limit of the proportion of the heat insulating particles in the interlayer film for laminated glass is more preferably 0.5 g/m², still more preferably 0.8 g/m², further preferably 1.2 g/m², still further preferably 1.5 g/m², and particularly preferably 2 g/m². The upper limit thereof is more preferably 9 g/m², still more preferably 8 g/m², further preferably 7 g/m², still further preferably 5 g/m², and particularly preferably 4 g/m². When the amount and proportion of the heat insulating particles satisfy the above preferable lower limit, the Tts is further lowered. When the amount and proportion of the heat insulating particles satisfy the above preferable upper limit, the visible transmittance is further enhanced.

### (Compound X)

The compound X is at least one compound selected from the group consisting of a phthalocyanine compound, a naphtalocyanine compound, and an anthracyanine compound.

The compound X is not particularly limited, and a conventionally-known phthalocyanine compound, naphtalocyanine compound, or anthracyanine compound may be used as the compound X.Only one species of the compound X may be used, or two or more species of the compounds X may be used in combination.

Combination use of the heat insulating particles, the compound X, and the yellow dye sufficiently blocks infrared rays (heat rays).

Examples of the compound X include phthalocyanine, a phthalocyanine derivative, naphtalocyanine, a naphtalocyanine derivative, anthracyanine, and an anthracyanine derivative. The phthalocyanine and the phthalocyanine derivative each preferably have a phthalocyanine skeleton. The naphtalocyanine and the naphtalocyanine derivative each preferably have a naphthalocyanine skeleton. The anthracyanine and the anthracyanine derivative each preferably have an anthracyanine skeleton.

In terms of further enhancing the heat insulation property of the laminated glass and further lowering the Tts, the compound X is preferably one compound selected from the group consisting of phthalocyanine, a phthalocyanine derivative, naphtalocyanine, and a naphtalocyanine derivative. More preferably, the compound X is at least one compound selected from the group consisting of phthalocyanine and a phthalocyanine derivative. The compound X preferably contains a metal, and more preferably contains copper, because the heat ray-insulation property may be sufficiently enhanced. The compound X preferably contains a metal or copper as a central metal. Moreover, the compound X is preferably a naphtalocyanine compound containing a metal, and more preferably a naphtalocyanine compound containing copper, because the heat ray-insulation property may be further enhanced.

The total amount of the compound X and the yellow dye is preferably not more than 0.25 parts by weight relative to each 100 parts by weight of the thermoplastic resin. Or alternatively, the interlayer film for laminated glass of the present invention preferably contains the compound and the yellow dye in the proportion of not more than 1.5 g/m². In the present invention, the total amount of the compound X and the yellow dye is not more than 0.25 parts by weight relative to each 100 parts by weight of the thermoplastic resin, or the interlayer film for laminated glass contains the compound X and the yellow dye in the total proportion of not more than 1. 5 g/m². When the total amount of the compound X and the yellow dye relative to each 100 parts by weight of the thermoplastic resin and the total proportion of the compound X and the yellow dye in the interlayer film for laminated glass are respectively within the above ranges, the Tts is sufficiently lowered and the visible transmittance is sufficiently enhanced. For example, the Tts of not higher than 53% and the visible transmittance of not lower than 70% are both achieved. Here, in the present invention, the compound X and the yellow dye may satisfy both the total amount of not more than 0.25 parts by weight relative to each 100 parts by weight of the thermoplastic resin and the total proportion of not more than 1.5 g/m² in the interlayer film for laminated glass.

The lower limit of the total amount of the compound X and the yellow dye relative to each 100 parts by weight of the thermoplastic resin is preferably 0.005 parts by weight, more preferable 0.03 parts by weight, still more preferably 0.04 parts by weight, and particularly preferably 0.07 parts by weight. The upper limit thereof is preferably 0.24 parts by weight, more preferably 0.2 parts by weight, still more preferably 0.18 parts by weight, and particularly preferably 0.15 parts by weight. The lower limit of the total proportion of the compound X and the yellow dye in the interlayer film for laminated glass is preferably 0.005 g/m², more preferably 0.03 g/m², still more preferably 0.2 g/m², and particularly preferably 0.25 g/m². The upper limit thereof is preferably 1. 5 g/m², more preferably 1.2 g/m², still more preferably 1 g/m², and particularly preferably 0.7 g/m². When the total amount and total proportion of the compound X and the yellow dye satisfy the above lower limit, the Tts is further lowered. When the total amount and the total proportion of the compound X and the yellow dye satisfy the above upper limit, the visible transmittance is further enhanced.

The amount of the compound X is preferably 0.001 to 0.04 parts by weight relative to each 100 parts by weight of the thermoplastic resin. Or alternatively, the interlayer film for laminated glass of the present invention preferably contains the compound X in the proportion of 0.005 to 0.2 g/m². When the amount of the compound X relative to each 100 parts by weight of the thermoplastic resin or the proportion of the compound X in the interlayer film for laminated glass is within the above range, the Tts is further lowered, and the visible transmittance is further enhanced.

The lower limit of the amount of the compound X is more preferably 0.002 parts by weight, still more preferably 0.005 parts by weight, and particularly preferably 0.01 parts by weight, relative to each 100 parts by weight of the thermoplastic resin. The upper limit thereof is more preferably 0.025 parts by weight, still more preferably 0.022 parts by weight, and particularly preferably 0.02 parts by weight. The lower limit of the proportion of the compound X in the interlayer film for laminated glass is more preferably 0.01 g/m², still more preferably 0.028 g/m², and particularly preferably 0.055 g/m². The upper limit thereof is more preferably 0.15 g/m², still more preferably 0.13 g/m², and particularly preferably 0.12 g/m². When the amount and the proportion of the compound X satisfy the above preferable lower limit, the Tts is further lowered. When the amount and the proportion of the compound X satisfy the above preferable upper limit, the visible transmittance is further enhanced.

### (Yellow dye)

The yellow dye contained in the interlayer film for laminated glass of the present invention is not particularly limited. Only one species of the yellow dye may be used, or two or more species of the yellow dyes may be used in combination. The yellow dye effectively absorbs transmitted light having wavelengths of preferably 380 to 500 nm, more preferably 390 to 480 nm, still more preferably 395 to 460 nm, and particularly preferably 400 to 450 nm. Then, use of the yellow dye, in addition to the heat insulating particles and the compound X, further lowers the Tts. The lower limit of the maximum absorption wavelength of the yellow dye is preferably 380 nm, more preferably 390 nm, still more preferably 395 nm, and particularly preferably 400 nm. The upper limit thereof is preferably 500 nm, more preferably 480 nm, still more preferably 460 nm, and particularly preferably 450 nm. The maximum absorption wavelength within the above range allows sufficient enhancement of the heat ray- insulation property. The maximum absorption wavelength of the yellow dye is measured, for example, using a solution (cell length of 1 mm, quartz cell) containing 0.01 parts by weight of the yellow dye in 100 parts by weight of triethylene glycol di-2-ethylhexanoate (3GO) and a spectrophotometer (Hitachi High-Technologies Corporation, "U-4100").

Specific examples of the yellow dye include an anthraquinone dye, a quinoline dye, an isoquinoline dye, a monoazo dye, a disazo dye, a quinophthalone dye, a perylene dye, a triphenylmethane dye, and a methine dye. Among these, an anthraquinone dye is preferable from the standpoint of further enhancing the heat insulation property of the interlayer film for laminated glass.

Examples of the commercially-available yellow dyes include "ORACET Yellow GHS" (anthraquinone dye, maximum absorption wavelength of 450 nm) supplied by Ciba Japan K.K., "KP Plast Yellow G" (methine dye, maximum absorption wavelength of 400 nm), "KP Plast Yellow 2G" (quinophthalone dye, maximum absorption wavelength of 420 nm), "KP Plast Yellow 3G" (monoazo dye, maximum absorption wavelength of 395 nm), "KP Plast Yellow F" (isoquinoline dye, maximum absorption wavelength of 415 nm), "KP Plast Yellow 7G" (perylene dye, maximum absorption wavelength of 460 nm), all supplied by KIWA Chemical Industry co., ltd.

The amount of the yellow dye is preferably 0.005 to 0.24 parts by weight relative to each 100 parts by weight of the thermoplastic resin. Or alternatively, the interlayer film for laminated glass of the present invention preferably contains the yellow dye in the proportion of 0.025 to 1.45 g/m². When the amount of the yellow dye relative to each 100 parts by weight of the thermoplastic resin or the proportion of the yellow dye in the interlayer film for laminated glass is within the above range, the Tts is further lowered and the visible transmittance is further enhanced.

The lower limit of the amount of the yellow dye is more preferably 0.01 parts by weight, still more preferably 0.04 parts by weight, and particularly preferably 0.06 parts by weight, relative to each 100 parts by weight of the thermoplastic resin. The upper limit thereof is more preferably 0.2 parts by weight, still more preferably 0.15 parts by weight, and particularly preferably 0.1 parts by weight. The lower limit of the proportion of the yellow dye in the interlayer film for laminated glass is more preferably 0.05 g/m², still more preferably 0.2 g/m², and particularly preferably 0. 3 g/m². The upper limit thereof is more preferably 1.2 g/m², still more preferably 1 g/m², and particularly preferably 0.8 g/m². When the amount and the proportion satisfy the above preferable lower limit, the Tts is further lowered. When the amount and the proportion satisfy the above preferable upper limit, the visible transmittance is further enhanced.

### (Other components)

The interlayer film for laminated glass of the present invention may contain, if necessary, additives such as a UV absorber, an antioxidant, a light stabilizer, a flame retardant, an antistatic agent, a pigment, a dye, an adhesion modifier, a damp-proof agent, a fluorescent brightener, and an infrared absorber. The interlayer film for laminated glass of the present invention preferably contains an antioxidant. Moreover, the interlayer film for laminated glass of the present invention preferably contains a UV absorber.

### (Interlayer film for laminated glass)

Fig. 1 is a cross-sectional view schematically showing one example of a laminated glass including an interlayer film for laminated glass according to one embodiment of the present invention.

A laminated glass 1 illustrated in Fig. 1 has an interlayer film 2 and a first and a second laminated glass components 3 and 4. The interlayer film 2 is used to produce a laminated glass. The interlayer film 2 is an interlayer film for laminated glass. The interlayer film 2 is interposed between the first and the second laminated glass components 3 and 4. Accordingly, in the laminated glass 1, the first laminated glass component 3, the interlayer film 2, and the second laminated glass component 4 are stacked in this order.

The interlayer film 2 contains a thermoplastic resin, a plasticizer, a heat insulating particle 5, the compound X, and a yellow dye. The interlayer film 2 contains a plurality of heat insulating particles 5. The interlayer film 2 may have a multilayer structure including two or more layers.

Examples of the first and second laminated glass components 3 and 4 include a glass sheet and a PET (polyethyleneterephthalate) film. The laminated glass 1 may be a laminated glass in which an interlayer film is interposed between two glass sheets, or a laminated glass in which an interlayer film is interposed between a glass sheet and a PET film. The laminated glass 1 is a laminated body having a glass sheet and preferably includes at least one glass sheet.

The glass sheet may be inorganic or organic glass. Examples of the inorganic glass include float plate glass, heat ray-absorbing plate glass, heat ray-reflecting plate glass, polished plate glass, molded plate glass, mesh-reinforced plate glass, wire-reinforced plate glass, and green glass. Among these, heat ray-absorbing plate glass is preferably used as the inorganic glass. Moreover, heat ray-absorbing plate glass in accordance with JIS R3208 is preferably used as the inorganic glass. The organic glass is synthetic resin glass which may replace the inorganic glass. Examples thereof include polycarbonate sheets and poly(meth)acrylic resin sheets. Examples of the poly(meth)acrylic resin sheets include polymethyl(meth)acrylate sheets.

The thicknesses of the first and second laminated glass components 3 and 4 are each preferably not thinner than 1 mm and not thicker than 5 mm, and more preferably not thicker than 3 mm. When a glass sheet is used as the first or second laminated glass component 3 or 4, the thickness thereof is preferably not thinner than 1 mm and not thicker than 5 mm, and more preferably not thicker than 3 mm. When a PET film is used as the first or second laminated glass component 3 or 4, the thickness thereof is preferably 0.03 to 0.5 mm.

A method of producing the laminated glass 1 is not particularly limited. For example, the interlayer film 2 is interposed between the first and second laminated glass components 3 and 4 and the air left between each of the laminated glass components 3 and 4 and the interlayer film 2 was removed by a pressure roll or by vacuum draw in a rubber bag. Then, the layers are provisionally bonded at about 70°C to 110°C to provide a laminated body. The laminated body is pressure-bonded in an autoclave or by pressing, at about 120°C to 150°C at a pressure of about 1 to 1.5 MPa. In this manner, the laminated glass 1 is provided.

The laminated glass 1 may be employed for automobiles, railway cars, aircrafts, vessels, buildings, and the like. The laminated glass 1 may be used, for example, for wind shields, side window glass, rear window glass, or roof glass of automobiles. The laminated glass 1 may also be employed for applications other than these applications. Because of its low Tts and high visible transmittance, the laminated glass 1 is favorably employed for automobiles.

From the standpoint of obtaining a laminated glass having higher heat insulation property, the Tts of the laminated glass 1 is preferably not higher than 53%, preferably not higher than 50%, and preferably not higher than 40 %. Moreover, from the standpoint of obtaining a laminated glass having higher transparency, the visible transmittance of the laminated glass 1 is preferably not lower than 70%.

It is to be noted that the interlayer film for laminated glass of the present invention may constitute the entire region or a portion of the interlayer film for laminated glass (main body of the interlayer film for laminated glass) in a plane. For example, the present invention includes an interlayer film for laminated glass in which a portion of a conventional interlayer film for laminated glass is replaced by the interlayer film for laminated glass of the present invention. The interlayer film for laminated glass of the present invention may be an interlayer film for laminated glass to be used in a portion of another interlayer film for laminated glass (main body of the interlayer film for laminated glass).

The present invention is described below in more detail with reference to examples. The present invention is not limited only to these examples.

### (Example 1)

### (1) Production of dispersion

An amount of 40 parts by weight of triethyleneglycol di-2-ethylhexanoate (3GO), 0.28 parts by weight of ITO particles (Mitsubishi Materials Corporation), 0.004 parts by weight of a naphthalocyanine compound (FUJIFILM Corporation, "FF-IRSORB 203"), and 0.234 parts by weight of a yellow dye (anthraquinone dye, maximum absorption wavelength of 450 nm, Ciba Japan K.K., "ORACET Yellow GHS") were mixed. A phosphate ester compound as a dispersant was added thereto and the mixture was then mixed using a horizontal micro-bead mill to provide a mixed solution. Next, 0.1 parts by weight of acetyl acetone was added to the mixed solution with stirring to prepare dispersion. The volume average particle size of the ITO particles in the dispersion was 35 nm. Here, the naphthalocyanine compound (FUJIFILM Corporation, "FF-IRSORB 203") contains copper.

### (2) Production of interlayer film for laminated glass

The whole dispersion obtained above was added to 100 parts by weight of a polyvinylbutyral resin (butyralization degree of 68.5 mol%, hydroxy group content of 30.5 mol%). The mixture was sufficiently melted and kneaded using a mixing roll, and the resulting mixture was extruded using an extruder to provide an interlayer film having a thickness of 0.76 mm.

### (3) Production of laminated glass

The obtained interlayer film for laminated glass was sandwiched between two heat ray-absorbing glass sheets (30 cm in height x 30 cm in width x 2.0 mm in thickness) in accordance with JIS R3208 to provide a laminated body. The laminated body was put in a rubber bag and deaeration was carried out at a vacuum of 2. 6 kPa for 20 minutes. The laminated body being deaerated was transferred into an oven and held at 90°C for 30 minutes for vacuum press. In this manner, the laminated body was provisionally pressure-bonded. The provisionally-bonded laminated body was pressure-bonded in an autoclave at 135°C and 1.2 MPa for 20 minutes. Consequently, a laminated glass 1 was obtained.

Another sheet of the obtained interlayer film for laminated glass was sandwiched between two float glass sheets (30 cm in height x 30 cm in width x 2.5 mm in thickness) to provide a laminated body. The laminated body was put in a rubber bag and deaeration was carried out at a vacuum of 2.6 kPa for 20 minutes. The laminated body being deaerated was transferred into an oven and held at 90°C for 30 minutes for vacuum press. In this manner, the laminated body was provisionally pressure-bonded. The provisionally-bonded laminated body was pressure-bonded in an autoclave at 135°C and 1.2 MPa for 20 minutes. Consequently, a laminated glass 2 was obtained.

### (Examples 2 to 9 and Comparative Examples 1 to 5)

Dispersions, interlayer films for laminated glass, and laminated glasses 1 and 2 were produced in the same manner as in Example 1 except that the composition of the interlayer film for laminated glass was changed as shown in Table 1.

### (Evaluations)

### (1) Measurement of Tts and Tds (Solar Direct Transmittance)

In accordance with the measuring method defined by the Cool Cars Standards, the Tts and the Tds of the obtained laminated glass 1 were measured. Specifically, the Tts and the Tds were measured in accordance with JIS R3106 (1998) using a spectrophotometer (Hitachi High-Technologies Corporation, "U-4100") .

### (2) Measurement of visible transmittance

The visible transmittance of the obtained laminated glass 1 was measured in accordance with JIS R3211 (1998) using a spectrophotometer (Hitachi High-Technologies Corporation, "U-4100") at wavelengths of 380 to 780 nm.

### (3) Measurement of haze value

The haze value of the obtained laminated glass 1 was measured in accordance with JIS K6714 using a haze meter (Tokyo Denshoku Co., Ltd., "TC-HIIIDPK").
Table 1 shows the results.
Here, Table 1 only shows the measurement results of the laminated glass 1. With also regard to the laminated glass 2, the obtained laminated glass had low Tts and high visible transmittance.

**[Table 1]**

| | Amount of ITO Particles*1 | Amount of Compound X *1 | Amount of Yellow Dye*1 | Total Amount of Compound X and Yellow Dye *1 | Concentration of ITO Particles *2 | Concentration of Compound X *2 | Proportion of Yellow Dye *2 | Tolal Proportion of Compound X and Yellow Dye *2 | Tts | Tds | A Light/Y Value Visible Trsansmitance | Haze Vlaue |
|---|---|---|---|---|---|---|---|---|---|---|---|---|
| | (Parts by Weight) | (Parts by Weight) | (Parts by Weight) | (Paris by Weght) | (g/m²) | (g/m²) | (g/m²) | (g/m²) | (%) | (%) | (%) | (%) |
| Ex. 1 | 0.28 | 0.004 | 0.234 | 0.238 | 1.65 | 0.025 | 1.439 | 1.464 | 49.8 | 32.4 | 70.1 | 0.3 |
| Ex. 2 | 0.28 | 0.014 | 0.149 | 0.163 | 1.65 | 0.082 | 0.919 | 1.001 | 48.1 | 30.2 | 70.0 | 0.3 |
| Ex. 3 | 0.14 | 0.029 | 0.043 | 0.072 | 0.82 | 0.173 | 0.269 | 0.442 | 49.0 | 31.4 | 70.6 | 0.3 |
| Ex. 4 | 0.56 | 0.014 | 0.064 | 0.078 | 3.30 | 0.082 | 0.396 | 0.478 | 48.3 | 30.5 | 70.8 | 0.4 |
| Ex. 5 | 0.56 | 0.014 | 0.085 | 0.099 | 3.30 | 0.082 | 0.527 | 0.609 | 47.7 | 29.6 | 70.2 | 0.4 |
| Ex. 6 | 0.56 | 0.021 | 0.021 | 0.042 | 3.30 | 0.124 | 0.136 | 0.260 | 48.9 | 31.4 | 70.9 | 0.4 |
| Ex. 7 | 0.63 | 0.014 | 0.064 | 0.078 | 3.71 | 0.082 | 0.396 | 0.478 | 48.0 | 30.1 | 70.5 | 0.4 |
| Ex. 8 | 0.63 | 0.014 | 0.074 | 0.088 | 3.71 | 0.082 | 0.462 | 0.544 | 47.7 | 29.6 | 70.2 | 0.4 |
| Ex. 9 | 0.63 | 0.021 | 0.021 | 0.042 | 3.71 | 0.124 | 0.136 | 0.260 | 48.7 | 31.0 | 70.6 | 0.4 |
| Comp. Ex. 1 | 0.98 | - | - | - | 5.77 | - | - | - | 56.0 | 41.4 | 74.4 | 0.5 |
| Comp. Ex. 2 | 0.28 | - | - | - | 1.65 | - | - | - | 59.6 | 46.3 | 78.0 | 0.3 |
| Comp. Ex. 3 | 0.56 | - | - | - | 3.30 | - | - | - | 57.9 | 44.0 | 76.5 | 0.3 |
| Comp. Ex. 4 | 0.84 | - | - | - | 4.94 | - | - | - | 56.6 | 42.2 | 75.1 | 0.5 |
| Comp. Ex. 5 | - | 0.028 | 0.106 | 0.134 | - | 0.165 | 0.661 | 0.820 | 50.7 | 33.8 | 69.9 | 0.3 |

| | | | | | | | | | | | | |
|---|---|---|---|---|---|---|---|---|---|---|---|---|
| *1 Amount (parts by weight) relative to each 100 parts by weight of thermoplastic resin *2 Proportion (g/m²) in the interlayer film for laminated glass | | | | | | | | | | | | |

### EXPLANATION OF SYMBOLS

- 1: Laminated glass
- 2.: Interlayer film for laminated glass
- 3.: First laminated glass component
- 4.: Second laminated glass component
- 5.: Heat insulating particles

## Claims

1. An interlayer film for laminated glass comprising:
a thermoplastic resin;
a plasticizer;
heat insulating particles;
at least one compound selected from the group consisting of a phthalocyanine compound, a naphtalocyanine compound, and an anthracyanine compound; and
a yellow dye,
wherein the amount of the heat insulating particles is 0.01 to 2 parts by weight and the total amount of the compound and the yellow dye is not more than 0.25 parts by weight, relative to each 100 parts by weight of the thermoplastic resin.

2. The interlayer film for laminated glass according to claim 1,
wherein the heat insulating particles are metal oxide particles.

3. The interlayer film for laminated glass according to claim 1 or 2,
wherein the amount of the compound is 0.001 to 0.04 parts by weight relative to each 100 parts by weight of the thermoplastic resin.

4. The interlayer film for laminated glass according to claim 1 or 2,
wherein the amount of the yellow dye is 0. 005 to 0.24 parts by weight relative to each 100 parts by weight of the thermoplastic resin.

5. An interlayer film for laminated glass comprising:
a thermoplastic resin;
a plasticizer;
heat insulating particles;
at least one compound selected from the group consisting of a phthalocyanine compound, a naphtalocyanine compound, and an anthracyanine compound; and
a yellow dye,
wherein the proportion of the heat insulating particles is 0.05 to 12 g/m² and the total proportion of the compound and the yellow dye is not more than 1.5 g/m².

6. The interlayer film for laminated glass according to claim 5,
wherein the heat insulating particles are metal oxide particles.

7. The interlayer film for laminated glass according to claim 5 or 6,
wherein the proportion of the compound is 0.005 to 0.2 g/m².

8. The interlayer film for laminated glass according to claim 5 or 6,
wherein the proportion of the yellow dye is 0.025 to 1.45 g/m².

9. A laminated glass comprising:
a first and a second laminated glass components; and
an interlayer film interposed between the first and the second laminated glass components,
wherein the interlayer film includes the interlayer film for laminated glass according to any one of claims 1 to 8 or is the interlayer film for laminated glass itself.

10. The laminated glass according to claim 9,
wherein the interlayer film interposed between the first and the second laminated glass components is the interlayer film for laminated glass itself.

## Patentansprüche

1. Zwischenfolie für Verbundglas, umfassend:
ein thermoplastisches Harz;
einen Weichmacher;
wärmeisolierende Teilchen;
mindestens eine Verbindung, gewählt aus der Gruppe, bestehend aus einer Phthalocyaninverbindung, einer Naphtalocyaninverbindung und einer Anthracyaninverbindung; und
einen gelben Farbstoff,
wobei die Menge der wärmeisolierenden Teilchen 0,01 bis 2 Gewichtsteile beträgt und die Gesamtmenge der Verbindung und des gelben Farbstoffs nicht mehr als 0,25 Gewichtsteile beträgt, bezogen auf jeweils 100 Gewichtsteile des thermoplastischen Harzes.

2. Zwischenfolie für Verbundglas nach Anspruch 1, wobei die wärmeisolierenden Teilchen Metalloxidteilchen sind.

3. Zwischenfolie für Verbundglas nach Anspruch 1 oder 2, wobei die Menge der Verbindung 0,001 bis 0,04 Gewichtsteile beträgt, bezogen auf jeweils 100 Gewichtsteile des thermoplastischen Harzes.

4. Zwischenfolie für Verbundglas nach Anspruch 1 oder 2, wobei die Menge des gelben Farbstoffs 0,005 bis 0,24 Gewichtsteile beträgt, bezogen auf jeweils 100 Gewichtsteile des thermoplastischen Harzes.

5. Zwischenfolie für Verbundglas, umfassend:
ein thermoplastisches Harz;
einen Weichmacher;
wärmeisolierende Teilchen;
mindestens eine Verbindung, gewählt aus der Gruppe, bestehend aus einer Phthalocyaninverbindung, einer Naphtaloxyaninverbindung und einer Anthracyaninverbindung; und
einen gelben Farbstoff;
wobei der Anteil der wärmeisolierenden Teilchen 0,05 bis 12 g/m² beträgt und der Gesamtanteil der Verbindung und des gelben Farbstoffs nicht mehr als 1,5 g/m² beträgt.

6. Zwischenfolie für Verbundglas nach Anspruch 5, wobei die wärmeisolierenden Teilchen Metalloxidteilchen sind.

7. Zwischenfolie für Verbundglas nach Anspruch 5 oder 6, wobei der Anteil der Verbindung 0,005 bis 0,2 g/m² beträgt.

8. Zwischenfolie für Verbundglas nach Anspruch 5 oder 6, wobei der Anteil des gelben Farbstoffs 0,025 bis 1,45 g/m² beträgt.

9. Verbundglas, umfassend:
eine erste und eine zweite Verbundglaskomponente; und
eine Zwischenfolie, welche zwischen der ersten und der zweiten Verbundglaskomponente angeordnet ist,
wobei die Zwischenfolie die Zwischenfolie für Verbundglas gemäß irgendeinem der Ansprüche 1 bis 8 beinhaltet oder die Zwischenfolie für Verbundglas selbst ist.

10. Verbundglas nach Anspruch 9, wobei die zwischen der ersten und der zweiten Verbundglaskomponente angeordnete Zwischenfolie die Zwischenfolie für Verbundglas selbst ist.

## Revendications

1. Film intermédiaire pour verre laminé comprenant :
une résine thermoplastique ;
un plastifiant ;
des particules d'isolation thermique ;
au moins un composé choisi dans le groupe constitué d'un composé phtalocyanine, d'un composé naphtalocyanine et d'un composé anthracyanine, et
un colorant jaune,
dans lequel la quantité de particules d'isolation thermique va de 0,01 à 2 parties en poids et la quantité totale du composé et du colorant jaune n'est pas supérieure à 0,25 parties en poids, pour 100 parties en poids de la résine thermoplastique.

2. Film intermédiaire pour verre laminé selon la revendication 1,
dans lequel les particules d'isolation thermique sont des particules en oxyde de métal.

3. Film intermédiaire pour verre laminé selon la revendication 1 ou 2,
dans lequel la quantité de composé va de 0,001 à 0,04 parties en poids pour 100 parties en poids de résine thermoplastique.

4. Film intermédiaire pour verre laminé selon la revendication 1 ou 2,
dans lequel la quantité de teinture jaune va de 0,005 à 0,24 parties en poids pour 100 parties en poids de résine thermoplastique.

5. Film intermédiaire pour verre laminé comprenant :
une résine thermoplastique ;
un plastifiant ;
des particules d'isolation thermique;
au moins un composé choisi dans le groupe constitué d'un composé phtalocyanine, d'un composé naphtalocyanine et d'un composé anthracyanine, et
un colorant jaune,
dans lequel la quantité de particules d'isolation thermique va de 0,05 à 12 g/m² et la quantité totale du composé et du colorant jaune n'est pas supérieure à 1,5 g/m².

6. Film intermédiaire pour verre laminé selon la revendication 5,
dans lequel les particules d'isolation thermique sont des particules en oxyde de métal.

7. Film intermédiaire pour verre laminé selon la revendication 5 ou 6,
dans lequel la quantité du composé va de 0,005 à 0,2 g/m².

8. Film intermédiaire pour verre laminé selon la revendication 5 ou 6,
dans lequel la quantité de colorant jaune va de 0,025 à 1, 45 g/m².

9. Verre laminé comprenant :
un premier et un deuxième composants du verre laminé ; et
un film intermédiaire interposé entre le premier et le deuxième composants du verre laminé,
dans lequel le film intermédiaire comprend le film intermédiaire pour verre feuilleté selon l'une quelconque des revendications 1 à 8, ou est le film intermédiaire pour le verre laminé lui-même.

10. Verre laminé selon la revendication 9,
dans lequel le film intermédiaire interposé entre le premier et le deuxième composants du verre laminé est le film intermédiaire pour le verre laminé lui-même.
